# EUROPÄISCHE PATENTANMELDUNG

(11) **EP 3 447 170 A1**
(43) Veröffentlichungstag der Anmeldung: **27.02.2019**
(21) Anmeldenummer: 17187336.7
(22) Anmeldetag: 22.08.2017
(51) Int. Cl.: C25D 11/16, B60R 13/00

(54) **LEISTENBAUTEIL**

(71) Anmelder: DURA Operating, LLC, Auburn Hills, MI 48326 (US)
(72) Erfinder: MAILFELD, Patrick, 58638 Iserlohn (DE); HUNDT, Torsten, 58809 Neuenrade (DE); STEGEMANN, Jan, 58809 Neuenrade (DE)
(74) Vertreter: Bungartz Christophersen Partnerschaft mbB Patentanwälte

(57) **Zusammenfassung**

Um bei einem aus einem Grundwerkstoff hergestellten Leistenbauteil einen ersten Dekorflächenabschnitt mit einem ersten optischen Erscheinungsbild und einen zweiten Dekorflächenabschnitt mit einem sich vom ersten optischen Erscheinungsbild unterscheidenden zweiten optischen Erscheinungsbild zu erzeugen, ist vorgesehen, das zweite optische Erscheinungsbilds des zweiten Dekorflächenabschnitts durch ein unmittelbar auf den Grundwerkstoff selbst einwirkendes und begrenzt auf den zweiten Dekorflächenabschnitt angewandtes Zwischenbehandlungsverfahren unter optischer Veränderung der Oberfläche des zweiten Dekorflächenabschnitts zu erzeugen und anschließend das Leistenbauteil durch Eloxieren einheitlich endzubehandeln.

## Beschreibung

Die Erfindung betrifft ein Leistenbauteil für ein Kraftfahrzeug mit einer bei bestimmungsgemäßer Montage am Kraftfahrzeug äußerlich sichtbaren Dekorfläche, wobei die Dekorfläche einen ersten Dekorflächenabschnitt mit einem ersten optischen Erscheinungsbild und einen zweiten Dekorflächenabschnitt mit einem sich vom ersten optischen Erscheinungsbild unterscheidenden zweiten optischen Erscheinungsbild aufweist, wobei das Leistenbauteil aus einem bevorzugt metallischen Grundwerkstoff hergestellt ist und sowohl das erste optische Erscheinungsbild des ersten Dekorflächenabschnitts als auch das zweite optische Erscheinungsbild des zweiten Dekorflächenabschnitts durch die Oberfläche des Grundwerkstoffs selbst mitbestimmt ist. Die Erfindung betrifft ferner ein Verfahren zur Herstellung eines derartigen Leistenbauteils.

Leistenbauteile, die zu Dekorzwecken eingesetzt werden, sind im Kraftfahrzeugbau bekannt. Im Außenbereich werden derartige Leistenbauteile insbesondere an Bauteilübergängen wie dem Übergang zwischen Fensterscheibe und Türkarosserie oder als eine eine Scheibenflächen einfassende Rahmenleiste eingesetzt. Bei dem Leistenbauteil kann es sich demnach insbesondere um eine Zierleiste wie beispielsweise eine Fensterrahmenleiste, eine auf die Türbrüstung einer Fahrzeugtür aufzusetzende Fensterschachtabdeckleiste oder um eine Zierleiste einer Windschutzscheibeneinfassung handeln. Es kann sich aber auch um eine Blendenleiste wie eine Säulenblende oder um eine sonstige Dekorleiste handeln. Weiter kann das Leistenbauteil auch eine Dachreling sein. Das Leistenbauteil kann ferner sowohl zur Anbringung im Fahrzeuginnenraum als auch als am Fahrzeugäußeren anzubringendes Leistenbauteil vorgesehen sein.

Unter einer Dekorfläche ist eine bei bestimmungsgemäßer Anbringung des Leistenbauteils am Kraftfahrzeug äußerlich sichtbare Bauteiloberfläche des Leistenbauteils zu verstehen, die eine Zierfläche ausbildet und dazu bestimmt ist, das optische Erscheinungsbild des Kraftfahrzeugs oder des Kraftfahrzeuginnenraums optisch mitzuprägen.

Neben dem mechanischen Bearbeiten einer Bauteiloberfläche eines derartigen metallischen Leistenbauteils zur Bildung einer Dekorfläche (beispielsweise Polieren, Mattieren, Bürsten) und dem Auftrag einer zusätzlichen Materialschicht (beispielsweise durch Lackieren, Verchromen) sind auch (elektro)chemische Verfahren zur Aufbereitung der für die Dekorfläche relevanten maßgeblichen Bauteiloberfläche bekannt. Häufig angewandt wird das Anodisieren der Bauteiloberfläche, insbesondere das Versehen der Bauteiloberfläche mit einer Eloxalschicht. Grundsätzlich bekannt sind außerdem (elektro)chemische Verfahren wie das Ätzen oder das Elektro-Polieren.

Auch wenn derartige, gezielt als Designelemente eingesetzte Leistenbauteile durchaus geeignet sind, das Äußere oder Innere eines Kraftfahrzeugs optisch mitzuprägen und einen bestimmten allgemeinen optischen Gesamteindruck zu erzeugen oder zumindest zu unterstützen, etwa ein edel anmutendes Erscheinungsbild durch die Verwendung von verchromten oder hochglanzpolierten Leisten oder ein eher sportliches Erscheinungsbild durch schwarz lackierte oder schwarz eloxierte Dekorflächen, so ist das Erscheinungsbild des Leistenbauteils selbst in sich statisch, also entlang der Dekorfläche konstant und einheitlich.

Die Druckschrift EP 2 705 988 A1 offenbart ein Leistenbauteil, dessen von einer einteiligen Bauteiloberfläche gebildete Dekorfläche zwei optisch unterschiedlich gestaltete Dekorflächenabschnitte aufweist. Zur Herstellung des Leistenbauteils ist allerdings das Aufbringen von Materiallagen und Schutzbeschichtungen erforderlich, die zum Teil auch wieder entfernt werden müssen, um eine von einer zweiten Materiallage bedeckte erste Materiallage durch nachträgliches Entfernen der zweiten Materiallage wieder zum Vorschein zu bringen. Das Verfahren ist daher aufwendig und erfordert eine Vielzahl von mechanischen Bearbeitungsschritten.

Der Erfindung liegt die Aufgabe zugrunde, ein Leistenbauteil der eingangs genannten Art bereitzustellen, das ein optisch in sich dynamischeres Erscheinungsbild aufweist. Ein Fahrzeughersteller soll in die Lage versetzt werden, seinen Kunden mit Blick auf die optische Ausgestaltung derartiger Leistenbauteile und die damit einhergehende Individualisierung eine größere Auswahl an Designmöglichkeiten anzubieten. Gleichzeitig soll die Herstellung des Leistenbauteils gegenüber der Herstellung des aus dem Stand der Technik bekannten Leistenbauteils in einfacherer Weise durchgeführt werden können. Die Erfindung stellt ferner ein Verfahren zur Herstellung eines derartigen Leistenbauteils bereit.

Zu diesem Zweck ist vorgesehen, dass
- wenigstens der zweite Dekorflächenabschnitt zur Erzeugung des zweiten optischen Erscheinungsbilds mit einem Behandlungsverfahren zwischenbehandelt ist, das unmittelbar auf den Grundwerkstoff selbst einwirkt und durch das eine optische Veränderung der Oberfläche des zweiten Dekorflächenabschnitts im Vergleich zum ersten Dekorflächenabschnitt herbeigeführt ist,
- die Zwischenbehandlung entweder auf den zweiten Dekorflächenabschnitt begrenzt angewendet ist oder auf den zweiten Dekorflächenabschnitt in anderer Ausprägung als auf den ersten Dekorflächenabschnitt angewendet ist, und
- der erste Dekorflächenabschnitt und der zweite Dekorflächenabschnitt durch Eloxieren einheitlich endbehandelt sind.

Hinsichtlich der Herstellung eines derartigen Leistenbauteils sind entsprechend die Verfahrensschritte vorgesehen:
- Verändern der Oberflächenbeschaffenheit des zweiten Dekorflächenabschnitts durch ein unmittelbar auf den Grundwerkstoff selbst einwirkendes sowie entweder begrenzt auf den zweiten Dekorflächenabschnitt angewandtes Zwischenbehandlungsverfahren oder auf den zweiten Dekorflächenabschnitt in unterschiedlicher Ausprägung als auf den ersten Dekorflächenabschnitt angewandtes Zwischenbehandlungsverfahren unter Herbeiführen einer optischen Veränderung der Oberfläche des zweiten Dekorflächenabschnitts im Vergleich zum ersten Dekorflächenabschnitt,
- Anschließendes einheitliches Endbehandeln der Oberflächen des ersten Dekorflächenabschnitts und des zweiten Dekorflächenabschnitts durch Eloxieren.

Das Leistenbauteil weist demnach eine Dekorfläche mit einem ersten Dekorflächenabschnitt und einem zweiten Dekorflächenabschnitt auf, die einerseits aufgrund des begrenzt auf den zweiten Dekorflächenabschnitt angewandten Behandlungsverfahrens (Zwischenbehandlung ausschließlich des zweiten Dekorflächenabschnitts oder sowohl des zweiten als auch zumindest eines Teils des ersten Dekorflächenabschnitts in jeweils unterschiedlicher Ausprägung), mittels dem eine optische Andersartigkeit des zweiten Dekorflächenabschnitts gegenüber dem ersten Dekorflächenabschnitt herbeigeführt wird, ein unterschiedliches Erscheinungsbild aufweisen, gleichwohl aber beide abschließend einheitlich durch ein Eloxal-Verfahren endbehandelt worden sind, also einer einheitlichen und beide Dekorflächenabschnitte erfassenden und einheitlich auf die Oberflächen des Grundwerkstoffs beider Dekorflächenabschnitte angewandten Endbehandlung unterzogen worden sind, die aber die zuvor begrenzt auf die Oberfläche des zweiten Dekorflächenabschnitts angewandte Zwischenbehandlung auch nach Anwendung der einheitlichen Endbehandlung nach wie vor erkennen lässt.

Bevorzugt wird bzw. ist die Zwischenbehandlung nur auf den zweiten Dekorflächenabschnitt begrenzt angewandt. Allerdings besteht grundsätzlich auch die Möglichkeit, dass dieselbe Art der Zwischenbehandlung auf zumindest einen Teil des ersten Dekorflächenabschnitts und auf den zweiten Dekorflächenabschnitt angewendet ist, hierbei die Anwendung zur Herbeiführung einer optischen Andersartigkeit der beiden Dekorflächenabschnitte allerdings in einer unterschiedlichen Ausprägung erfolgt. Eine unterschiedliche Ausprägung desselben Zwischenbehandlungsverfahrens liegt vor, wenn die bei der Zwischenbehandlung eingesetzten Medien, Materialien, Werkzeuge, Prozessparameter, etc., die bei dem zweiten Dekorflächenabschnitt eingesetzt werden, sich von denjenigen, die bei dem ersten Dekorflächenabschnitt Anwendung finden, in einer Weise unterscheiden, dass sich im zweiten Dekorflächenabschnitt ein anderes optisches Erscheinungsbild als im ersten Dekorflächenabschnitt ergibt. So können beispielsweise beide Dekorflächenabschnitte mit abrasiven Medien gestrahlt werden (Sandstrahlen, Glaskugelstrahlen, etc.), jedoch können für die beiden Dekorflächen beispielsweise unterschiedliche Partikeldichten und/oder Partikelgrößen und/oder Partikelenergien zum Einsatz kommen. Oder die Dekorflächenabschnitte können beide laserbestrahlt sein, wobei jedoch für die Dekorflächen Laserstrahlen mit unterschiedlichen Strahlungsenergien zum Einsatz kommen. Oder, falls die Dekorflächenabschnitte beide gebürstet werden, kann der zweite Oberflächenabschnitt mit härteren und/oder gröberen Bürsten und/oder mit größeren Anpressdruck behandelt sein.

Der Grundwerkstoff des Leistenbauteils ist der das Leistenbauteil strukturell bildende Werkstoff und ist bevorzugt eine Leichtmetalllegierung, insbesondere eine zum Eloxieren geeignete Aluminiumlegierung. Dass das erste optische Erscheinungsbild des ersten Dekorflächenabschnitts als auch das zweite optische Erscheinungsbild des zweiten Dekorflächenabschnitts durch die Oberfläche des Grundwerkstoffs selbst mitbestimmt ist, bedeutet insbesondere, dass die Oberflächenbeschaffenheit einer vom Grundwerkstoff gebildeten Bauteiloberfläche, insbesondere deren Rauigkeit, Glanzgrad oder Oberflächenstrukturierung, den Unterschied im optischen Erscheinungsbild des ersten und zweiten Dekorflächenabschnitts maßgeblich mitbestimmt. Demnach ist auch die infolge des Eloxierens oberflächennah chemisch umgewandelte und verdichtete sowie gegebenenfalls eingefärbte Oxidschicht des Grundwerkstoffs als Oberfläche des Grundwerkstoffs zu verstehen.

Das optische Erscheinungsbild beider Dekorflächenabschnitte wird demnach trotz des abschließenden Eloxierens der Oberflächen beider Dekorflächenabschnitte durch die Oberflächenbeschaffenheit einer vom Grundwerkstoff selbst gebildeten Bauteiloberfläche mitbestimmt, die durch die Zwischenbehandlung auch optisch verändert wurde. Ein nachträgliches Entfernen eines Teils einer zunächst aufzubringenden Materiallage (etwa einer Beschichtung, einer Lackschicht, einer Eloxal-Schicht), um das darunterliegende optische Erscheinungsbild, das durch das Aufbringen der Materiallage zunächst verdeckt wurde, wieder freizulegen, ist nicht erforderlich.

Bei der Herstellung des Leistenbauteils werden, nachdem die Formgebung des verwendeten Halbzeugs abgeschlossen ist, die Oberflächen sowohl des ersten Dekorflächenabschnitts als auch des zweiten Dekorflächenabschnitts bevorzugt einheitlich mit einem auf beide Dekorflächenabschnitte angewandte Verfahren vorbehandelt, so dass zunächst beiden Oberflächen der jeweiligen Dekorflächenabschnitte ein einheitliches optisches Erscheinungsbild verliehen ist. Dieses zunächst einheitliche Erscheinungsbild bestimmt bevorzugt gleichzeitig das spätere Erscheinungsbild des ersten Dekorflächenabschnitts oder zumindest eines wesentlichen Teils hiervon mit, da es bevorzugt vor dem einheitlichen Endbehandeln nicht weiter oder nur in Teilen verändert wird. Insbesondere kann vorgesehen sein, dass beide Dekorflächenabschnitte zunächst geschliffen (sofern als erster Schritt einer Oberflächenbehandlung vor einem Polieren erforderlich) und anschließend poliert werden. Die polierte Oberfläche des ersten Dekorflächenabschnitts bildet dann unverändert bevorzugt auch die Oberfläche oder zumindest eine Teil der Oberfläche, die der einheitlichen Endbehandlung unterzogen wird.

Anschließend wird zumindest der zweite Dekorflächenabschnitt der Zwischenbehandlung unterzogen. Bei diesem Behandlungsverfahren, das unter oberflächennaher optischer Veränderung der Oberflächenbeschaffenheit unmittelbar auf den Grundwerkstoff einwirkt, handelt es sich bevorzugt ein Behandlungsverfahren, das den Rauhigkeitswert der Oberfläche des zweiten Dekorflächenabschnitts erhöht und/oder zumindest den Glanz des zweiten Dekorflächenabschnitts reduziert. In Frage kommen hier insbesondere auf die Oberfläche des zweiten Dekorabschnitts mechanisch einwirkende Verfahren wie das Sandstrahlen, Glaskugelstrahlen, Bürsten oder Anschleifen. Es können aber auch Verfahren zum Einsatz kommen, die kontaktlos auf die Oberfläche des zweiten Dekorflächenabschnitts einwirken, etwa das Behandeln der Oberfläche des zweiten Dekorflächenabschnitts durch ein kontaktloses Bestrahlungsverfahren mit hochenergetischer Strahlung wie beispielsweise Plasmabestrahlung oder Laserbestrahlung, einschließlich des Lasertexturing. Hierdurch ist eine deutliche Glanzreduktion der Oberfläche oder gar die gezielte Einbringung einer Oberflächenstruktur erzielbar. Zur Anwendung kommen können auch (elektro)chemische Verfahren wie beispielsweise das Ätzen der vom Grundwerkstoff gebildeten Oberfläche oder eine fluid-mechanische Behandlung.

Falls sichergestellt werden soll, dass lediglich der zweite Dekorflächenabschnitt der Zwischenbehandlung unterzogen wird und der erste Dekorflächenabschnitt von dem Behandlungsverfahren nicht erfasst wird, kann der erste Dekorflächenabschnitt während der Zwischenbehandlung durch eine Maskierung maskiert sein, beispielsweise durch eine präzise Applikation einer den ersten Dekorflächenabschnitt abdeckenden und schützenden Maskierungsfolie, mit der das Einwirken des auf den zweiten Dekorflächenabschnitt angewandten Zwischenbehandlungsverfahren auf den ersten Dekorflächenabschnitt wirksam verhindert ist.

Es kann aber auch vorgesehen sein, dass die Zwischenbehandlung auf zumindest einen Teil des ersten Dekorflächenabschnitts und den zweiten Dekorflächenabschnitt angewendet ist bzw. angewendet wird und die Änderung des zweiten optischen Erscheinungsbilds gegenüber dem ersten optischen Erscheinungsbild zumindest über einen Grenzabschnitt hinweg fließend verläuft.

Die Verwendung einer Maskierungsfolie zur Maskierung des ersten Dekorflächenabschnitts ist selbstverständlich nur dann erforderlich, wenn das Behandlungsverfahren zur oberflächennahen Behandlung des zweiten Dekorflächenabschnitts nicht selbst ausreichend präzise auf die zu behandelnde Oberfläche des zweiten Dekorflächenabschnitts angewandt werden kann, ohne gleichzeitig auch wenigstens Teile der Oberfläche des ersten Dekorflächenabschnitts zu erfassen. Eine Maskierungsfolie kann demnach insbesondere dann erforderlich sein, wenn beabsichtigt ist, den zweiten Dekorflächenabschnitt mit abrasiven Medien zu bestrahlen (Sandstrahlen, Glaskugelstrahlen, etc.). Beim Laserbestrahlen, (einschließlich Laser-Texturing) des zweiten Dekorflächenabschnitts wird sich hingegen die Verwendung einer Maskierungsfolie abhängig von der Präzision der eingesetzten Bestrahlungsvorrichtungen gegebenenfalls vermeiden lassen.

Um eine Maskierung präzise und insbesondere unter Bildung einer klaren Grenzlinie zu dem zu behandelnden zweiten Dekorflächenabschnitt auf dem ersten Dekorflächenabschnitt anbringen zu können, kann vorgesehen sein, dass das Leistenbauteil eine entlang der Grenzlinie des ersten Dekorflächenabschnitts zum zweiten Dekorflächenabschnitt wenigstens abschnittsweise, bevorzugt durchgängig, eine Vertiefung oder Erhöhung aufweist. Besonders bevorzugt weist das Leistenbauteil eine entlang der Grenzlinie verlaufende Trennrille als Vertiefung auf. Die Vertiefung oder Erhöhung kann nach dem Aufbringen der Maskierung zur exakten Führung einer die Maskierungsfolie entlang der Grenzlinie auftrennenden Schneidvorrichtung, mit der die Maskierungsfolie exakt entlang der Grenzlinie beschnitten wird, eingesetzt werden. Die Maskierung kann so zunächst in einfacher Weise, insbesondere ohne sehr präzise arbeiten zu müssen, auf beiden Dekorflächenabschnitten aufgebracht werden. Anschließend wird die Dekorfläche mittels der entlang der Grenzlinie zu führenden Schneidvorrichtung aufgetrennt und der Bereich der Maskierung, der den zweiten Dekorflächenabschnitt zunächst noch bedeckt, wird abgelöst, während der den ersten Dekorflächenabschnitt bedeckende Bereich der Maskierung auf diesem verbleibt.

Nach dem Behandeln der zweiten Oberfläche mit dem Behandlungsverfahren wird das Leistenbauteil eloxiert. Bei Bedarf kann die entstandene Oxidschicht vor dem Verdichten eingefärbt werden. Die beiden Dekorflächenabschnitte weisen infolge des dem Eloxieren vorausgegangenen und nur oder in anderer Ausprägung auf den zweiten Dekorflächenabschnitt angewandten Oberflächenbehandlungsverfahren jeweils ein unterschiedliches optisches Erscheinungsbild auf. Insbesondere kann der erste Dekorflächenabschnitt glänzend bis hochglänzend ausgeführt sein, während der zweite Dekorflächenabschnitt lediglich einen seidenmatten Glanz oder ein gänzlich mattes Erscheinungsbild aufweist.

In den Zeichnungen zeigen
- Figur 1a: ein Leistenbauteil nach Vornahme einer Vorbehandlung,
- Figur 1b: das Leistenbauteil aus Figur 1b im Querschnitt,
- Figur 2a: das Leistenbauteil nach einer Zwischen- und Endbehandlung,
- Figur 2b: das Leistenbauteil aus Figur 2a im Querschnitt.

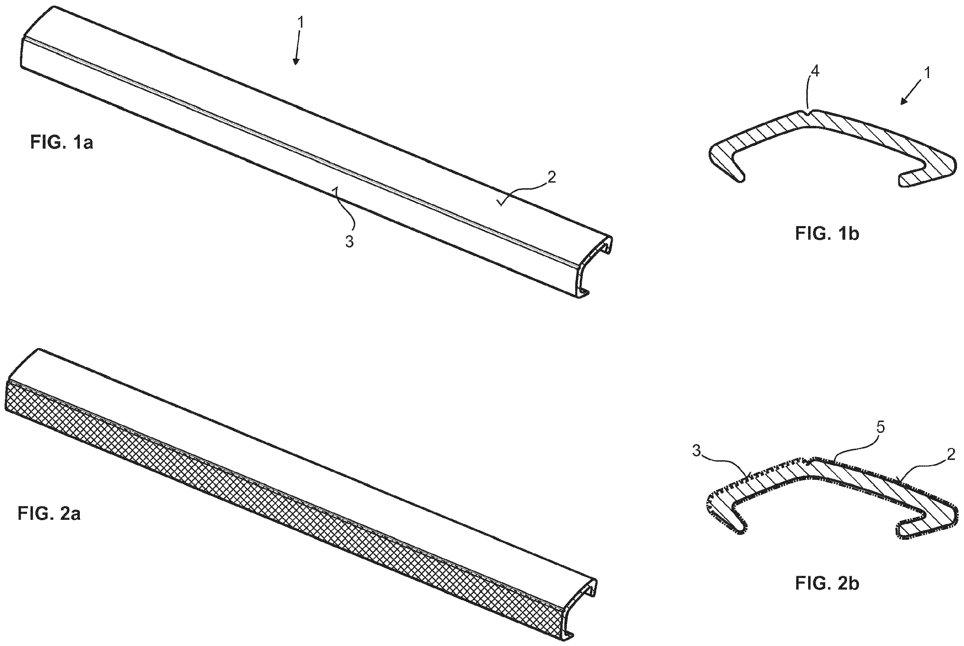

Figur 1a zeigt ein Leistenbauteil 1, das von einer Aluminiumleiste gebildet ist, die eingerichtet ist, als Zierleiste auf ein bevorzugt extrudiertes Dichtungsprofil aufgesetzt zu werden, mit dem zusammen es beispielsweise eine Fensterschachtabdeckleiste, eine Fensterrahmenleiste oder eine Scheibeneinfassung bilden kann. Das Leistenbauteil 1 weist eine bei bestimmungsgemäßer Montage am Kraftfahrzeug sichtbare Dekorfläche auf, die einen ersten Dekorflächenabschnitt 2 und einem zweiten Dekorflächenabschnitt 3 umfasst.

Zur Herstellung dieses noch unfertigen Leistenbauteils wurde zunächst ein Aluminiumhalbzeug einem Formgebungsprozess unterzogen. Anschließend wurde die gesamte Dekorfläche in einem einheitlichen Verfahrensschritt geschliffen und poliert, so dass der erste Dekorflächenabschnitt 2 und der zweite Dekorflächenabschnitt 3 ein einheitliches Aussehen und eine einheitliche Oberflächenbeschaffenheit aufweisen.

In Figur 2a ist das Leistenbauteil 1 aus Figur 1a im letztlich einbaufertigen Endzustand gezeigt. Wie aus Figur 2a durch die Kreuzschraffur ersichtlich, weist die Oberfläche des zweiten Dekorflächenabschnitts 3 ein anderes optisches Erscheinungsbild auf als die Oberfläche des ersten Dekorflächenabschnitts 2.

Nach dem Schleifen und Polieren des in Figur 1a gezeigten Leistenbauteils 1 wurde die beide Dekorflächenabschnitte 2,3 umfassende Dekorfläche zunächst durch eine Maskierungsfolie maskiert. Anschließend wurde die Maskierungsfolie unter Zuhilfenahme einer Trennrille 4 (Figur 1b und Figur 2b), die exakt an der Grenze zwischen dem ersten Dekorflächenabschnitt und dem zweiten Dekorflächenabschnitt verläuft bzw. die Grenze zwischen beiden Dekorflächenabschnitten definiert, entlang der Trennlinie beschnitten und die Maskierung lediglich auf dem ersten Dekorflächenabschnitt belassen. Die Trennrille unterstützt dabei die hoch exakte Führung eines Schneidwerkzeugs wie einer Messerklinge selbst dann, wenn dieses aufgrund eines komplexen Verlaufs bzw. einer komplexen Geometrie des Leistenbauteils von Hand geführt werden muss.

Anschließend wird die den zweiten Dekorflächenabschnitt bildende Bauteiloberfläche mit einem Behandlungsverfahren zwischenbehandelt, durch das die Oberflächenbeschaffenheit des zweiten Dekorflächenabschnitts gegenüber der Oberflächenbeschaffenheit des ersten Dekorflächenabschnitts in optisch wahrnehmbarer Weise verändert wird. Hierbei kann insbesondere vorgesehen sein, den zweiten Dekorflächenabschnitt sandzustrahlen, wodurch die Oberflächenrauigkeit des zweiten Oberflächenabschnitts gegenüber der nach wie vor polierten Oberfläche des ersten Dekorflächenabschnitts deutlich sichtbar erhöht wird. Die Maskierungsfolie verhindert dabei die Anwendung des Zwischenbehandlungsverfahren auf den ersten Dekorflächenabschnitt und stellt die begrenzte Anwendung der Zwischenbehandlung auf lediglich den zweiten Dekorflächenabschnitt sicher.

Anschließend wird, nachdem die Maskierung entfernt wurde, das Leistenbauteil eloxiert und so einer alle Bauteiloberflächen des Leistenbauteils erfassenden Endbehandlung unterzogen. Insbesondere werden der erste und der zweite Dekorflächenabschnitt einheitlich endbehandelt. In Figur 2b ist die Endbehandlung durch die den Leistenquerschnitt umspannende strichpunktierte Linie schematisch angedeutet, die eine durch die Endbehandlung erzeugte Eloxalschicht 5 andeutet. Die durch die Zwischenbehandlung erzeugte Oberflächenbeschaffenheit ist in Figur 2b durch die den zweiten Dekorflächenabschnitt symbolisierende punktierte Linie dargestellt.

Der Vollständigkeit halber sei angemerkt, dass es selbstverständlich auch mehr als zwei sich durch unterschiedliche optische Erscheinungsbilder auszeichnende Dekorflächenabschnitte vorgesehen sein können, wobei dann bevorzugt auch eine entsprechende Anzahl von entlang den Grenzlinien zwischen diesen Dekorflächenabschnitten verlaufenden Trennrillen vorgesehen sein können.

### Bezugszeichenliste

- 1: Leistenbauteil
- 2: erster Dekorflächenabschnitt
- 3: zweiter Dekorflächenabschnitt
- 4: Trennrille
- 5: Eloxalschicht

## Patentansprüche

1. Leistenbauteil (1) für ein Kraftfahrzeug mit einer bei bestimmungsgemäßer Montage am Kraftfahrzeug äußerlich sichtbaren Dekorfläche, wobei die Dekorfläche zumindest einen ersten Dekorflächenabschnitt (2) mit einem ersten optischen Erscheinungsbild und zumindest einen zweiten Dekorflächenabschnitt (3) mit einem sich vom ersten optischen Erscheinungsbild unterscheidenden zweiten optischen Erscheinungsbild aufweist, wobei das Leistenbauteil (1) aus einem Grundwerkstoff hergestellt ist und sowohl das erste optische Erscheinungsbild des ersten Dekorflächenabschnitts (2) als auch das zweite optische Erscheinungsbild des zweiten Dekorflächenabschnitts (3) durch die Oberflächenbeschaffenheit des Grundwerkstoffs mitbestimmt ist,
**dadurch gekennzeichnet, dass**
- wenigstens der zweite Dekorflächenabschnitt (3) zur Erzeugung des zweiten optischen Erscheinungsbilds mit einem Behandlungsverfahren zwischenbehandelt ist, das unmittelbar auf den Grundwerkstoff einwirkt und durch das eine optische Andersartigkeit der Oberfläche des zweiten Dekorflächenabschnitts (3) im Vergleich zum ersten Dekorflächenabschnitt (2) hervorgerufen ist,
- die Zwischenbehandlung entweder auf den zweiten Dekorflächenabschnitt (3) begrenzt angewendet ist oder auf den zweiten Dekorflächenabschnitt (3) in anderer Ausprägung als auf den ersten Dekorflächenabschnitt (2) angewendet ist, und
- der erste Dekorflächenabschnitt (2) und der zweite Dekorflächenabschnitt (3) durch Eloxieren einheitlich endbehandelt sind.

2. Leistenbauteil nach dem vorhergehenden Anspruch, **dadurch gekennzeichnet, dass** das der erste Dekorflächenabschnitt (2) von einer zunächst polierten und anschließend eloxierten Oberfläche des Grundwerkstoffs gebildet ist.

3. Leistenbauteil nach Anspruch 1 oder Anspruch 2, **dadurch gekennzeichnet, dass** der zweite Dekorflächenabschnitt (3) gegenüber dem ersten Dekorflächenabschnitt (2) eine höhere Oberflächenrauigkeit und/oder einen reduzierten Glanzgrad aufweist.

4. Leistenbauteil nach einem der vorhergehenden Ansprüche, **dadurch gekennzeichnet, dass** wenigstens der zweite Dekorflächenabschnitt (3) mit abrasiven Medien gestrahlt oder durch lokale thermische oder fluid-mechanische Behandlung zwischenbehandelt ist.

5. Leistenbauteil nach einem der vorhergehenden Ansprüche, **dadurch gekennzeichnet, dass** das Leistenbauteil (1) entlang einer Grenzlinie zwischen erstem Dekorflächenabschnitt (2) und zweitem Dekorflächenabschnitt (3) wenigstens abschnittsweise eine Vertiefung oder Erhöhung aufweist.

6. Leistenbauteil Leistenbauteil nach einem der vorhergehenden Ansprüche, **dadurch gekennzeichnet, dass** die Zwischenbehandlung auf zumindest einen Teil des ersten Dekorflächenabschnitts (2) und den zweiten Dekorflächenabschnitt (3) angewendet ist und die Änderung des ersten optischen Erscheinungsbilds zum zweiten optischen Erscheinungsbild fließend verläuft.

7. Verfahren zur Herstellung eines Leistenbauteils (1) nach einem der der vorhergehenden Ansprüche, **umfassend die Verfahrensschritte**
- Verändern der Oberflächenbeschaffenheit des zweiten Dekorflächenabschnitts (3) durch eine unmittelbar auf den Grundwerkstoff einwirkende und entweder begrenzt auf den zweiten Dekorflächenabschnitt (3) angewandte Zwischenbehandlung oder auf den zweiten Dekorflächenabschnitt (3) in unterschiedlicher Ausprägung als auf den ersten Dekorflächenabschnitt (2) angewandte Zwischenbehandlung unter Herbeiführen einer optischen Andersartigkeit der Oberfläche des zweiten Dekorflächenabschnitts (3) im Vergleich zum ersten Dekorflächenabschnitt (2),
- Anschließendes einheitliches Endbehandeln der Oberflächen des ersten Dekorflächenabschnitts (2) und des zweiten Dekorflächenabschnitts (3) durch Eloxieren.

8. Verfahren zur Herstellung eines Leistenbauteils nach dem vorhergehenden Anspruch, **dadurch gekennzeichnet, dass** der erste Dekorflächenabschnitt (2) und der zweite Dekorflächenabschnitt (3) vor der Anwendung der Zwischenbehandlung auf den zweiten Dekorflächenabschnitt (3) durch eine einheitliche Vorbehandlung der Oberflächen sowohl des ersten Dekorflächenabschnitts (2) als auch des zweiten Dekorflächenabschnitts (3) vorbehandelt werden.

9. Verfahren zur Herstellung eines Leistenbauteils nach einem der beiden vorhergehenden Ansprüche, **dadurch gekennzeichnet, dass** der erste Dekorflächenabschnitt (2) und der zweite Dekorflächenabschnitt (3) vor der Anwendung der Zwischenbehandlung auf den zweiten Dekorflächenabschnitt (3) durch Polieren einheitlich vorbehandelt werden.

10. Verfahren zur Herstellung eines Leistenbauteils nach einem der drei vorhergehenden Ansprüche, **dadurch gekennzeichnet, dass** eine durch eine Vorbehandlung erzeugte Oberfläche des ersten Dekorflächenabschnitts (2) unverändert der Endbehandlung durch Eloxieren unterzogen wird.

11. Verfahren nach einem der vier vorhergehenden Ansprüche, **dadurch gekennzeichnet, dass** der erste Dekorflächenabschnitt (2) vor der Zwischenbehandlung des zweiten Dekorflächenabschnitts (3) maskiert wird.

12. Verfahren nach dem vorhergehenden Anspruch, **dadurch gekennzeichnet, dass** zur Maskierung eine Maskierungsfolie auf zumindest den ersten Dekorflächenabschnitt (2) aufgebracht wird.

13. Verfahren nach einem der beiden vorhergehenden Ansprüche, **dadurch gekennzeichnet, dass** vor der Zwischenbehandlung des zweiten Dekorflächenabschnitts (3) die Maskierung entlang einer zwischen dem ersten Dekorflächenabschnitt (2) und dem zweiten Dekorflächenabschnitt (3) verlaufenden Grenzlinie beschnitten wird.

14. Verfahren nach einem der vorhergehenden Ansprüche 7 bis 13, **dadurch gekennzeichnet, dass** der zweite Dekorflächenabschnitt (3) durch ein die Oberflächenrauigkeit steigerndes oder ein den Glanzgrad herabsetzendes Verfahren zwischenbehandelt wird.

15. Verfahren nach einem der vorhergehenden Ansprüche 7 bis 14, **dadurch gekennzeichnet, dass** der zweite Dekorflächenabschnitt (3) mit abrasiven Medien bestrahlt oder durch lokale thermische oder fluid-mechanische Behandlung zwischenbehandelt wird.
